# EUROPÄISCHE PATENTSCHRIFT

(11) **EP 2 930 812 B1**
(45) Veröffentlichungstag und Bekanntmachung des Hinweises auf die Patenterteilung: **01.04.2020**
(21) Anmeldenummer: 15152153.1
(22) Anmeldetag: 22.01.2015
(51) Int. Cl.: H02J 3/06, H02J 3/16, H02J 3/38

(54) **Blindleistungsmanagement**
Reactive power management
Gestion de puissance réactive

(30) Priorität: 09.04.2014 DE 102014005168
(43) Veröffentlichungstag der Anmeldung: 14.10.2015
(73) Patentinhaber: RWE Deutschland AG, 45128 Essen (DE)
(72) Erfinder: Gaul, Armin, Dr.-Ing., 59379 Selm (DE); Hammerschmidt, Torsten, Dr., 44267 Dortmund (DE)
(74) Vertreter: Cohausz & Florack

(56) Entgegenhaltungen:
- EP-A1- 1 906 505
- EP-A1- 2 693 588
- DE-A1-102011 012 695
- DE-A1-102011 122 580
- US-A- 5 760 492
- US-A1- 2013 161 951
- PETER ESSLINGER ET AL: "Increasing grid transmission capacity and power quality by a new solar inverter concept and inbuilt data communication", INNOVATIVE SMART GRID TECHNOLOGIES CONFERENCE EUROPE (ISGT EUROPE), 2010 IEEE PES, IEEE, PISCATAWAY, NJ, USA, 11. Oktober 2010 (2010-10-11), Seiten 1-8, XP031803679, ISBN: 978-1-4244-8508-6
- MARK MCGRANAGHAN: "Introduction and Schedule ; 2011 CIRED Panel Tutorial binder_AH", IEEE DRAFT; 2011 CIRED PANEL TUTORIAL BINDER_AH, IEEE-SA, PISCATAWAY, NJ USA, Bd. td.dist.da;15.06.08, 2. Juni 2011 (2011-06-02), Seiten 1-276, XP068032382, [gefunden am 2011-06-02]

## Beschreibung

Der Gegenstand betrifft ein Verfahren, eine Steuereinrichtung sowie ein System zum Blindleistungsmanagement in einem elektrischen Niederspannungsnetz. Vorzugsweise erfolgt gegenständlich ein Management von Blindleistungsflüssen. Dies kann gegenständlich im Nieder- oder Mittelspannungsnetz erfolgen.

Auf Grund des vorgegebenen politischen Ziels der Energiewende werden dezentrale Erzeugungsanlagen verstärkt gefördert. Hierzu zählen insbesondere Windkraftanlagen, Biomasseanlagen, Wasserkraftanlagen, Photovoltaikanlagen sowie Meeresenergie- als auch Geothermieanlagen, die alle eine alternative Stromerzeugung neben den mit fossilen Energieträgern als auch Kernbrennstoffen betriebenen Anlagen ermöglichen. Die genannten, als auch weitere dezentrale Erzeugungsanlagen (nachfolgend teilweise auch Kraftwerke genannt) werden von Teilnehmern innerhalb eines Verteilnetzes, vorzugsweise eines Niederspannungsnetzes betrieben. Solche Anlagen erzeugen elektrische Energie aus anderen Energieträgern.

Dabei sind jedoch nach wie vor strenge Anforderungen an die zu liefernde Spannungsqualität einzuhalten, insbesondere darf die Netzspannung bei den an die Niederspannung angeschlossenen Teilnehmern nur in einem sehr engen Spannungsband von beispielsweise ± 10 % um die Nennspannung von 400 V bzw. 230 V schwanken. Neben der Energieeinspeisung können Teilnehmer auch Bezieher elektrischer Energie sein und die Einspeisung wie auch der Bezug eines Teilnehmers unabhängig voneinander schwanken. Diese Schwankungen beim Bezug als auch bei der Einspeisung sind große Herausforderungen für die Netzbetreiber, die verpflichtet sind, die genannte Spannungsqualität an den Netzanschlüssen der Teilnehmer stets zu garantieren.

Die US 2013/0161951 A1 offenbart ein Verfahren zum Bestimmen eines Spannungsbegrenzungsbereichs, der einen Bereich einer Windturbinenreferenzspannung für eine Windturbine zum Steuern einer Ausgangsspannung des Windturbinenausgangsanschlusses definiert.

Die EP 1 906 505 A1 zeigt einen Umrichter für ein Versorgungsnetz, welcher einen Sollzusammenhang zwischen Netzspannung und Wirkleistung oder Blindleistung aufweist, die einen von einer Netzimpedanz des Versorgungsnetzes abhängigen Bereich ohne Einflussnahme aufweist.

Die EP 2 693 588 A1 zeigt ein System zur Steuerung eines Versorgungsnetzes.

Die DE 10 2011122 580 A1 beschreibt ein Verfahren zum Betreiben eines elektronischen Versorgungsnetzes, das einen Transformator aufweist, wobei der Transformator die Spannung einer oberen Spannungsebene mit einer ersten Nennspannung, deren Überschreitung im Netzbetrieb bis zu einer zulässigen Höchstspannung zulässig ist.

Der Artikel "Increasing Grid Transmission Capacity and Power Quality by a new Solar Inverter Concept and Inbuilt Data Communication" von Peter Esslinger und Rolf Witzmann beschreibt ein Verfahren, bei welchem Blindleistung verwendet wird, die von den Solar-Wechselrichtern erzeugt wird, um die Leistungsfähigkeit und Netzqualität zu erhöhen.

Die Präsentation "Smart Distribution Systems for a Low Carbon Energy Future Workshop" von Mark McGranaghan vom 6. - 9. Juni, 2011, in Frankfurt zeigt die Entwicklung im Bereich von smart grids.

Die US 5,760,492 beschreibt ein Steuerungssystem für ein Leistungsübertragungs- und - verteilungssystem mit mehreren verteilten Energie, welche Empfangseinheiten liefern und jeweils eine Steuereinheit enthalten, die an einer Stromverteilungsleitung angeordnet sind.

Die DE 10 2011 012 695 A1 offenbart ein Verfahren zum Einhalten der Netzstabilität in einem elektrischen Versorgungsnetz. An das Versorgungsnetz sind über einen ersten Netzverknüpfungspunkt ein Energielieferant und über einen zweiten Netzverknüpfungspunkt ein veränderlicher Transformator angeschlossen.

Es ist bekannt, dass es durch Lastwechsel zwischen Energiebezug und -einspeisung sowie durch deren beider Volatilität zu Schwankungen der Netzspannung kommt. Dennoch darf die Netzspannung den vorgenannten Bereich nicht verlassen. Mit zunehmender dezentraler Erzeugung steigen aber die Amplituden dieser Schwankungen, so dass ab einem bestimmten Punkt, der für jedes Verteilnetz und jede Netzebene verschieden ist, ein Netzausbau zum Anschluss weiterer dezentraler Erzeugungsanlagen erforderlich werden kann. Bestehende Verteilnetze wurden in der Vergangenheit lediglich auf die aus den Schwankungen des Energiebezugs resultierenden Spannungsschwankungen und nicht auf die durch dezentrale Erzeugung zusätzlich hervorgerufenen Schwankungen ausgelegt.

Neben dem Netzausbau bietet der Blindleistungsbezug von Teilnehmern im Fall hoher dezentraler Erzeugung eine Möglichkeit zur Dämpfung der mit der Einspeisung einhergehenden Spannungsanhebungen und erlaubt damit den Anschluss weiterer dezentraler Erzeuger zunächst ohne Netzausbau bzw. -verstärkung.

Es ist bekannt, dass Teilnehmer in einem Versorgungsnetz, insbesondere den Mittel- als auch Niederspannungsnetzen, fest vorgegebene Blindleistungsflüsse realisieren können. Auch ist bekannt, dass an einem Übergabepunkt zwischen der Mittelspannungsebene und der Niederspannungsebene, insbesondere im Bereich eines Ortsnetztransformators, ein Blindleistungsausgleich stattfinden kann. Der Ausgleich der Blindleistung erfolgt dabei herkömmlicherweise über die vorgelagerte Netzebene, insbesondere durch die an das Verteilnetz angeschlossene, zentrale Kraftwerke.

Die aus dem Stand der Technik fest vorgegebene Blindleistungskompensation führt jedoch bei variierender Einspeisung durch dezentrale Erzeugungsanlagen selten zu befriedigenden Ergebnissen. Ferner bleibt die Frage nach dem Ort der Erzeugung der Blindleistung und der Einhaltung von Blindleistungsvorgaben am Übergabepunkt zu einem vorgelagerten Netzbetreiber bei bekannten Lösungen unberücksichtigt. Dezentrale Erzeuger regeln die Blindleistung ausschließlich auf der Basis lokaler Messwerte ohne eine übergreifende Optimierungsinstanz.

Aus diesem Grunde lag dem Gegenstand die Aufgabe zu Grunde, das Spannungsprofil entlang eines Leitungsstrangs eines Niederspannungsnetzes durch Variation des Blindleistungsflusses zu regulieren.

Zur Lösung dieser Aufgaben wird gegenständlich ein Verfahren nach Anspruch 1, eine Steuereinrichtung nach Anspruch 10 sowie ein System nach Anspruch 11 vorgeschlagen.

Gegenständlich erfolgt eine Verbesserung oder Optimierung des Spannungsprofils in dem Niederspannungsnetz unter Berücksichtigung der aktuellen Netztopologie und/oder eines gemessenen bzw. interpolierten Spannungsprofils und/oder der Möglichkeiten die Blindleistungsflüsse von einzelnen oder allen Teilnehmern in diskreten Zeitschritten automatisch zu variieren. Insbesondere wird durch eine einem Netzteil z.B. einer Erzeugungsanlage, zugeordnete zentrale Steuereinrichtung von einem Teilnehmer zu beziehende oder einzuspeisende Blindleistung abhängig von den Eingangsgrößen der Optimierung bestimmt und an den Teilnehmer übermittelt.

Gegenständlich wird für vorzugsweise jede dezentrale Erzeugungsanlage in dem betrachteten Netzgebiet ein dezidierter Wert eines Blindleistungsflusses berechnet. Ziel ist es, das Spannungsprofil in einem Niederspannungsnetz zu verbessern, ggf. zu optimieren. Hierbei ist es das vorrangige Ziel, in einem Niederspannungsnetz an möglichst allen Anschlusspunkten von Teilnehmern, sei es solche mit Erzeugungsanlage oder auch reinen Verbrauchern, stets die Einhaltung des Spannungsbandes zu garantieren. Vorzugsweise wird dann zusätzlich versucht, den Abstand der tatsächlichen Spannung an den Anschlusspunkten der Teilnehmer von den Grenzen der Spannungsbänder zu maximieren. Hierbei wird vorzugsweise versucht, die Summe aller Abstände aller Teilnehmer zu den Grenzen des Spannungsbandes bei Einhaltung des Spannungsbandes zu erhöhen, vorzugsweise zu maximieren. Das Optimum wäre dann erreicht, wenn an allen Teilnehmern die Spannung genau in der Mitte zwischen dem oberen und dem unteren Grenzwert des Spannungsbandes läge. Dieses Optimum ist in der Regel nicht zu erreichen. Diese Optimierung erfolgt vorzugsweise unter zentraler Berücksichtigung der Topologie eines Niederspannungsnetzes. Außerdem erfolgt eine zentrale Berücksichtigung der technischen Möglichkeiten jeder einzelnen Erzeugungsanlage. Hierzu wird eine verteilte Messung von elektrischen Größen, vorzugsweise einer Netzspannung durchgeführt. Es ist jedoch auch möglich, alternativ oder kumulativ lokal sowohl Wirk- als auch Blindleistungsflüsse zu messen. Hierzu können entlang im Niederspannungsnetz Messeinrichtungen angeordnet sein, die die aktuelle Spannung an dem jeweiligen Ort messen. Die Messwerte können der Zentrale zur Verfügung gestellt werden.

Eine Steuereinrichtung empfängt von den Messeinrichtungen Informationen zu den gemessenen elektrischen Größen und führt für jeweils ein Niederspannungsnetz, insbesondere für ein bestimmtes Netzgebiet, eine Optimierung des Spannungsbandes durch. Hierbei werden zunächst Informationen zu den empfangenen elektrischen Größen ausgewertet. Mit Hilfe der empfangenen elektrischen Größen und der Kenntnis über die Topologie des Niederspannungsnetzes kann die Steuereinrichtung das Spannungsprofil in dem Verteilnetz berechnen. Insbesondere werden neben den gemessenen elektrischen Größen die relative oder absolute Positionen der innerhalb eines Leitungsstranges befindlichen Messeinrichtungen ebenfalls der Steuereinrichtung übermittelt bzw. durch Voreinstellung / Programmierung in der Steuereinrichtung hinterlegt. Zudem ist innerhalb einer Zentrale die Netztopologie bekannt, insbesondere durch Voreinstellung / Programmierung von einem Netzbetreiber.

Die aktuelle Netztopologie ist der Steuereinrichtung vorzugsweise durch automatische Datenübernahme aus einem System des Netzbetreibers bekannt. Diese dient neben den Messpunkten und den von dort übertragenen Messdaten als Eingangsgröße zur Ermittlung des Spannungsprofils.

Das Spannungsprofil kann auf diese Weise auf der gesamten Leitung bzw. in dem betrachteten Netzgebiet bestimmt werden. Nicht gemessene Werte an den Orten der Teilnehmer können durch die Rechnung bestimmt und der Spannungsverlauf zwischen den Messpunkten somit interpoliert werden.

Die Positionen der Teilnehmer und die technischen Möglichkeiten der dezentralen Erzeugungsanlagen - einschließlich gegebenenfalls vorhandener Abhängigkeiten der Blindleistungs- von der aktuellen Wirkleistungseinspeisung - können der Steuereinrichtung ebenfalls automatisch oder bei der Inbetriebnahme einmalig durch Voreinstellung oder Programmierung bekannt gegeben werden.

Ein Verteilnetz kann gegenständlich als ein Niederspannungsnetz verstanden werden, welches hinter einem Ortsnetztransformator angeordnet ist. Insbesondere ist ein Verteilnetz ein solches Netz, welches durch galvanische Trennung durch einen Transformator mit einer übergeordneten Netzebene gespeist wird.

Die empfangene Information zu der elektrischen Größe wird einer Position der lokalen Messeinrichtung innerhalb eines Niederspannungsnetzes zugeordnet. Somit ist die Lage der Messeinrichtung innerhalb des Verteilnetzes bekannt. Dies ermöglicht, es das Spannungsprofil entlang der Leitungsstränge des Verteilnetzes zu berechnen, insbesondere zwischen den Messpunkten zu interpolieren.

Auf der Basis der gemessenen Werte als auch der Position der gemessenen Werte erfolgt insbesondere auch unter Berücksichtigung der aktuellen Netztopologie die Erstellung eines Spannungsprofils entlang der Leitungsstränge des Niederspannungsnetzes.

Hierbei ist es möglich, Werte zwischen lokal gemessenen elektrischen Größen zu interpolieren. Dabei kann jeder gemessenen elektrischen Größe eine Position innerhalb des Niederspannungsnetzes bzw. Verteilstranges zugeordnet werden und entlang des Niederspannungsnetzes bzw. Verteilstranges kann eine Interpolation erfolgen, so dass ein Spannungsverlauf erstellt werden kann.

Zur Verbesserung des Spannungsprofils, insbesondere zur Vermeidung von Spannungswerten an Netzanschlusspunkten von Teilnehmern, die außerhalb eines vorgegebenen Spannungsbandes liegen, erfolgt basierend auf dem errechneten Spannungsprofil das Bestimmen eines Blindleistungswertes für zumindest einen Teilnehmer an dem Leitungsstrang bzw. in dem betrachteten Netzgebiet. Dies kann unter Berücksichtigung der zuvor vom Teilnehmer übermittelten oder voreingestellten bzw. parametrierten Möglichkeiten erfolgen. Den Teilnehmern, zu denen ein geeigneter Kommunikationskanal besteht, wird der errechnete, für den Leitungsstrang bzw. das gesamte betrachtete Netz optimale Blindleistungswert (Einspeisung- oder Bezug) mitgeteilt, der die technischen Möglichkeiten des Teilnehmers berücksichtigt. Dieser Wert wird von den Teilnehmern vorzugsweise umgehend automatisch umgesetzt..

Hierbei kann folgende Betrachtung berücksichtigt werden. Im Verbraucherzählpfeilsystem kann eine aufgenommene induktive Blindleistung durch den Teilnehmer auch als eine abgegebene kapazitive Blindleistung durch den Teilnehmer bezeichnet werden.

Jedem Teilnehmer kann ein Blindleistungswert, insbesondere ein Wert des Blindleistungsflusses zugeteilt werden. Durch eine Zentrale ist es dynamisch und unter Berücksichtigung der Netztopologie möglich, exakte Blindleistungsflüsse zumindest in Teilbereichen des Netzes zu bestimmen und somit die Netzkapazität zu verbessern, insbesondere werden durch erhöhte Einspeisung von Wirkleistung bewirkte Spannungsspitzen durch den zeitlich passend geregelten Bezug von Blindleistung reduziert, so dass eine größere Leistung dezentral erzeugten Wirkstroms eingespeist werden kann, ohne dass Spannungsbandgrenzen verletzt werden.

Mit Hilfe der dynamischen Veränderung der Blindleistungswerte abhängig von den gemessenen Spannungswerten, der Netztopologie und den technischen Möglichkeiten der Teilnehmer wird insbesondere versucht, alle Spannungen in dem betrachteten Leitungsstrang / Netzgebiet, an Orten an denen Teilnehmer angeschlossen sind, in dem zulässigen Spannungsband zu halten.

Unter Einhaltung dieses ersten Optimierungsziels wird der Blindleistungsbezug aus bzw. die Blindleistungseinspeisung in das vorgelagerte Netz auf einen der Steuereinrichtung extern vorgebbaren Wert optimiert. Hierbei wird versucht, die Blindleistungsübertragung über den Transformator zwischen den Netzebenen, vorzugsweise zwischen der Mittelspannungsebene und der Niederspannungsebene zu optimieren, insbesondere zu minimieren. Dann kann der Transformator für die Übertragung von mehr Wirkleistung genutzt werden.

Bei der Berechnung der Blindleistungswerte für die Teilnehmer wird nachfolgend versucht, den Blindleistungsfluss innerhalb eines Leitungsstranges / eines Verteilnetzes auf ein Mindestmaß zu begrenzen, das zur Spannungsbeeinflussung erforderlich ist, um die Verluste durch Blindströme zu reduzieren.

Mit Hilfe der gegenständlichen Überwachung und Steuerung von Blindleistungsflüssen ist es möglich, die vorhandene Netzkapazität zur Übertragung von Wirkleistung in bestimmten Fällen zu erweitern, da Spannungsbandrestriktionen aufgehoben oder aufgeweitet werden.

Dadurch, dass der Wert des Blindleistungsflusses für einen Teilnehmer abhängig vom jeweils aktuellen Spannungsprofil bestimmt wird, kann verhindert werden, dass durch dezentral möglicherweise gegenläufig geregelte Blindleistungsflüsse von Teilnehmern Instabilitäten innerhalb des Leitungsstrangs oder des Netzgebietes auftreten.

Die zur Spannungsabsenkung von den Erzeugern am Ende des Netzes zusätzlich bezogene induktive Blindleistung kann durch Erzeuger am Anfang des Stranges / nahe dem Netzverknüpfungspunkt zur überlagerten Spannungsebene (z. B. nahe der Ortsnetzstation in der Niederspannung) eingespeist werden.

Die vom vorgelagerten Netzbetreiber geforderten Blindleistungswerte können somit am Verknüpfungspunkt der Netze zum vorgelagerten Netz eingestellt werden. Netzverluste können durch die optimierten gesteuerten Blindleistungsvorgaben (Einspeisungen und Aufnahmen) gegenüber lokal autonom geregelten Einspeisungen minimiert werden.

Gemäß einem Ausführungsbeispiel wird vorgeschlagen, dass abhängig von zumindest zwei lokal gemessenen Größen ein Spannungsprofil entlang des Niederspannungsnetzes und/oder Leitungsstrangs ermittelt wird. Hierbei ist es bevorzugt, wenn zwischen den zwei lokal gemessenen Größen das Spannungsprofil vorzugsweise linear und/oder unter Berücksichtigung des Netzprofils interpoliert wird. Dies ergibt einen vorzugsweise kontinuierlichen, stetigen Verlauf der Spannung zwischen den Messpunkten, woraus das Spannungsprofil in der Zentrale abgeleitet werden kann.

Die elektrischen Größen werden jeweils in Intervallen, vorzugsweise im Minutentakt, im Viertelstundentakt, im Halbstundentakt oder auch sekündlich gemessen. Die gemessenen elektrischen Größen können drahtlos und drahtgebunden übermittelt werden, insbesondere kann eine Powerline Kommunikation oder eine Kommunikation über ein zellulares Funknetz erfolgen. In der Zentrale kann dynamisch das Spannungsprofil aktualisiert werden. Abhängig von dem jeweils berechneten Spannungsprofil können neue Vorgaben für die Blindleistungswerte den Teilnehmern mitgeteilt werden. Diese Übertragung kann entsprechend der Übermittlung der gemessenen elektrischen Größen erfolgen.

Vorzugsweise erfolgt eine dynamische Anpassung des Spannungsprofils zur Vermeidung von Ausbrüchen der Spannung an den Teilnehmern aus dem vorgegebenen Spannungsband. Das Spannungsband schwankt vorzugsweise um +/-10% um eine Nennspannung.

Dadurch, dass der Wert des Blindleistungsflusses für einen Teilnehmer abhängig vom jeweils aktuellen Spannungsprofil bestimmt werden kann, kann verhindert werden, dass durch gegenläufig geregelte Blindleistungsflüsse von Teilnehmern Instabilitäten innerhalb des Leitungsstrangs bzw. das Verteilnetzes auftreten.

Gemäß einem Ausführungsbeispiel wird vorgeschlagen, dass der Wert des Blindleistungsflusses des Teilnehmers zusätzlich abhängig von der Position des Teilnehmers bestimmt wird. Gegenständlich wird vorgeschlagen, dass die Position der Messeinrichtung verwendet wird, um das Spannungsprofil entlang des Leitungsstrangs zu berechnen. Abhängig von dem Spannungsprofil soll der Blindleistungswert für zumindest einen der Teilnehmer bestimmt werden. Hierbei ist es relevant, an welcher Position innerhalb des Leitungsstrangs / Verteilnetzes der Teilnehmer angeordnet ist, d. h. wo im Verlauf des Leitungsstrangs der Blindleistungsfluss durch den Teilnehmer bewirkt wird, um diesen hinsichtlich eines Blindleistungsbeitrags einstellen zu können.

Teilnehmer und Messeinrichtungen können an verschiedenen Orten mit dem Verteilnetz verbunden sein. Messeinrichtungen und Teilnehmer können somit räumlich auseinanderfallen und voneinander entfernt im Verteilnetz angeordnet sein. Dadurch, dass bei der Berechnung des Spannungsprofils der Ort der Messeinrichtungen berücksichtigt wird, kann mit Hilfe einer Interpolation oder einer anderen Abschätzung das Spannungsprofil entlang des gesamten Verteilnetzes berechnet werden. Somit ist an jedem Punkt des Verteilnetzes ein ggf. berechneter Spannungswert bekannt, insofern ist auch an jedem Anschlusspunkt eines Teilnehmers der dort aktuelle Spannungswert bekannt. In Kenntnis dieses Spannungswerts kann für einen Teilnehmer, der eine Erzeugungsanlage betreibt, bestimmt werden, ob dieser Blindleistung einspeisen soll oder Blindleistung aufnehmen soll und ggf. auch den Betrag der Blindleitung. Hierdurch wird das Spannungsprofil vorzugsweise geglättet, insbesondere wird die Spannung derart verändert, dass an allen Teilnehmeranschlüssen die Vorgaben zum zulässigen Spannungsband eingehalten werden.

Gemäß einem Ausführungsbeispiel entspricht der Blindleistungswert, welcher bestimmt wird, dem Verschiebungsfaktor cos ϕ oder auch Grundschwingungsleistungsfaktor genannt. Diese entspricht in erster Näherung dem Quotienten aus der Grundschwingungswirkleistung und der Grundschwingungsscheinleistung. Abhängig davon, ob cos ϕ, also insbesondere die Spreizung zwischen Wirk- und Scheinleistung positiv oder negativ ist, erfolgt die Bestimmung eines kapazitiven oder induktiven Blindleistungsflusses zwischen dem Teilnehmer und dem Verteilnetz.

Gemäß einem Ausführungsbeispiel wird vorgeschlagen, dass die Werte des Blindleistungsflusses derart bestimmt werden, dass entfernt von einem Netzverknüpfungspunkt bezogene induktive Blindleistung durch im Bereich an einem Netzverknüpfungspunkt eingespeiste induktive Blindleistung überlagert wird. Innerhalb des Niederspannungsnetzes also jeweils niederspannungsseitig eines Netzverknüpfungspunktes erfolgt eine zumindest teilweise Kompensation der Blindleistungen. Es wird insbesondere versucht, die Blindleistungsbilanz entlang des Teilnehmerstrangs möglichst neutral zu gestalten, insbesondere durch Ausgleich von induktiven und kapazitiven Blindleistungsflüssen zwischen den jeweiligen Teilnehmern und dem Niederspannungsnetz.

Um das Spannungsprofil ermitteln zu können, ist die Spannung zumindest an einigen Positionen im Niederspannungsnetz zu messen. Diese Positionen, an denen die Messeinrichtungen die elektrischen Größen erfassen, müssen bekannt sein. Aus diesem Grunde wird von einer Messeinrichtung eine Information zu einer relativen und/oder absoluten Position der Messeinrichtung in dem Niederspannungsnetz durch die Steuereinrichtung empfangen. Ferner kann eine eindeutige Kennung der Messeinrichtung in der Steuereinrichtung empfangen werden. Diese dient der Zuordnung der Messwerte zu der jeweiligen Messeinrichtung. Die Position als auch die Kennung kann automatisch oder manuell getriggert bei einer Erstinstallation des Teilnehmers übermittelt werden. Auch kann die Position einer Messeinrichtung in der Steuereinrichtung programmiert bzw. manuell eingepflegt werden.

Die Übermittlung, insbesondere die Information zu den gemessenen elektrischen Größen, die Information zur Position des Teilnehmers als auch die Kennung des Teilnehmers erfolgt kabellos oder kabelgebunden. Auch die sonstige Kommunikation zwischen dem Teilnehmer und der Zentrale, also insbesondere die Information zu den Blindleistungsflüssen erfolgt entsprechend. Hierbei sind insbesondere Weitverkehrsnetze, wie beispielsweise zellulare Netze, wie z.B. Mobilfunknetze geeignet, die entsprechenden Informationen zu übertragen. Jedoch ist auch eine Übertragung mittels Powerline Kommunikation oder dergleichen möglich.

Wie die Messeinrichtung auch, kann der Teilnehmer eine Information zu seiner relativen und/oder absoluten Position in dem Niederspannungsnetz an die Steuereinrichtung senden. Diese Information ist in der Steuereinrichtung empfangbar. Auch kann von dem Teilnehmer in der Steureinrichtung eine eindeutige Kennung empfangen werden. Mithilfe der eindeutigen Kennung können die Positionsinformationen als auch die nachfolgend an den Teilnehmer übermittelten Informationen zum Wert des Blindleistungsflusses dem Teilnehmer zugeordnet werden.

Es ist insbesondere möglich, dass der Teilnehmer Informationen zu seiner maximalen Wirkleistung und/oder seiner maximal induktiven und/oder kapazitiven Blindleistung aussendet, welche steureinrichtungsseitig empfangen werden können. Diese Informationen können insbesondere bei einer Erstinstallation automatisch oder manuell getriggert durch die Teilnehmer ausgesendet werden und in der Steureinrichtung empfangen werden. Auch ist es möglich in der Steureinrichtung zumindest diese Informationen des Teilnehmers zu programmieren/parametrieren, insbesondere durch manuelle Pflege der Datensätze. Dasselbe gilt für die Messeinrichtung. Die Informationen können entweder in der Steureinrichtung empfangen werden oder dort parametriert d. h. manuell eingepflegt werden.

Gemäß einem Ausführungsbeispiel wird vorgeschlagen, dass von einem Teilnehmer eine Information über eine Abhängigkeit von Wirkleistungsaufnahme/-abgabe zu kapazitive oder induktive Blindleistung empfangen wird.

Ein weiterer Aspekt ist eine Steuereinrichtung nach Anspruch 10. Diese Steuereinrichtung (zuvor auch als Zentrale bezeichnet) operiert als übergeordnete Instanz und empfängt die gemessenen Werte, erstellt daraus das Spannungsprofil und übermittelt abhängig vom jeweils aktuellen Spannungsprofil Informationen zu den Teilnehmern über ihre Soll-Blindleistungsflüssen also Soll-Blindleistungsaufnahme oder -abgabe. Diese Informationen dienen den Teilnehmern dazu, ihre Blindleistungsflüsse einzustellen und somit einen Beitrag zur Erreichung der oben genannten Ziele zu leisten.

Ein weiterer Gegenstand ist ein System mit einer entsprechenden Steuereinrichtung und zumindest einem Teilnehmer, eingerichtet zum Empfang von Blindleistungswerten von der Steuereinrichtung und zum Regeln eines Blindleistungsflusses entsprechend dem empfangenen Blindleistungswert.

Eine Messeinrichtung in einem solchen System kann beispielsweise ein Smart Meter sein. Auch ist es möglich, dass die in den Erzeugungsanlagen ohnehin meist vorhandenen Wechselrichter die Netzspannung und andere elektrische Größen des Netzes messen können und somit als Messsensoren dienen können. Ferner ist es möglich, dass Ladestationen zum Laden von Elektrofahrzeugen auch als Messeinrichtungen verwendet werden.

Nachfolgend wird der Gegenstand anhand einer Ausführungsbeispiele zeigenden Zeichnung näher erläutert. In der Zeichnung zeigen:
- Fig. 1: ein Verteilnetz mit verschiedenen Leitungssträngen;
- Fig. 2a: den Verlauf eines Spannungsprofils unter Berücksichtigung von Wirkleistungseinspeisung;
- Fig. 2b: den Verlauf eines Spannungsprofils nach Figur 2a mit Blindleistungskompensation.

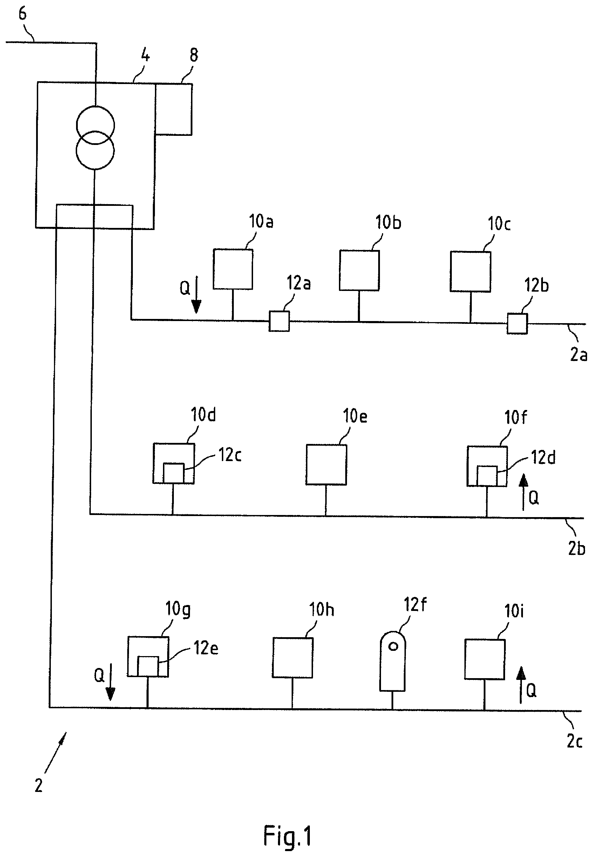

Figur 1 zeigt ein Niederspannungsverteilnetz 2 mit drei Leitungssträngen 2a - 2c. Das Niederspannungsverteilnetz 2 ist über einen Ortsnetztransformator 4 mit einem Mittelspannungsnetz 6 verbunden. An dem Ortsnetztransformator 4 ist eine Steuereinrichtung 8 angeordnet. Hierbei sei zu beachten, dass die Steuereinrichtung 8 auch entfernt von dem Ortsnetztransformator 4 angeordnet sein kann.

Die Steuereinrichtung 8 kommuniziert beispielsweise über Funk, beispielsweise über ein Mobilfunknetz mit zumindest einigen der dargestellten Teilnehmer 10a - i. Ferner besteht eine Kommunikation zwischen der Steuereinrichtung 8 und den Messeinrichtungen 12a - f, hierbei vorzugsweise ebenfalls über ein Weitverkehrsnetz, z.B. ein Mobilfunknetz und/oder das Internet. Die nachfolgend beschriebenen Eigenschaften einzelner Messeinrichtungen 12 oder einzelner Teilnehmer 10 können natürlich sinngemäß auch für jeweils andere Messeinrichtungen 12 oder Teilnehmer 10 gelten.

In dem gezeigten Beispiel sind an jedem Leitungsstrang 2 a, b, c mehrere Teilnehmer 10a -i angeschlossen. Insbesondere sind am Leitungsstrang 2a die Teilnehmer 10a, 10b und 10c, am Leistungsstrang 2b die Teilnehmer 10d, 10e und 10f und am Leistungsstrang 2c die Teilnehmer 10g, 10h und 10i angeschlossen. Im Leitungsstrang 2a können die Teilnehmer 10a und 10c z.B. eine Erzeugungsanlage aufweisen, die sowohl Wirkleistung als auch Blindleistung in den Leitungsstrang 2a einspeisen kann sowie Blindleistung aufnehmen kann.

Entlang des Leitungsstrangs 2a sind die Messeinrichtungen 12a, 12b, entlang des Leitungsstrand 2b die Messeinrichtungen 12c und 12d und entlang des Leitungsstrand 2c die Messeinrichtungen 12e und 12f angeordnet, wobei diese beispielsweise in Muffen, in Endverschlüssen innerhalb der Leitung oder in Hausanschlüssen, Smart Meters, Ladestationen, Wechselrichtern von Erzeugungsanlagen oder dergleichen angeordnet sein können.

Bei der Installation der Messeinrichtungen 12a, 12b können diese ihre lokale Position an die Steuereinrichtung 8 übermitteln. Auch ist es möglich, dass in der Steuereinrichtung 8 die Position der Messeinrichtung 12a, 12b parametriert wird, indem deren vorzugsweise relative Position entlang des Leitungsstrangs 2a manuell eingegeben wird. Auch übermitteln bei der Installation die Messeinrichtung 12a, 12b eine eindeutige Kennung, mit der eine dezidierte Kommunikation zwischen der jeweiligen Messeinrichtung 12a, 12b und der Steuereinrichtung 8 möglich ist.

Die Teilnehmer 10a und 10c, welche eine Erzeugungsanlage, insbesondere eine Photovoltaikanlage umfassen, sind über einen Wechselrichter mit dem Leitungsstrang 2a verbunden. Bei der Erstinstallation der Wechselrichter kann beispielsweise der Steuereinrichtung 8 sowohl eine vorzugsweise absolute Position, z.B. Geokoordinaten, z.B. GPS Koordinaten, als auch eine eindeutige Kennung übermitteln. Die Position kann jedoch auch in der Steuereinrichtung 8 eingegeben werden. Darüber hinaus ist es möglich, dass der in Teilnehmer 10a verbaute Wechselrichter zusätzlich seine maximale Wirkleistung sowie seine induktive als auch kapazitive Blindleistungskapazität der Steuereinrichtung 8 mitteilt.

Auch ist es möglich, dass diese Information in der Steuereinrichtung 8 eingegeben, also parametriert werden. Darüber hinaus ist es möglich, dass der Wechselrichter eine Abhängigkeit zwischen Blindleistungs- und Wirkleistungsfluss hat, welche ebenfalls der Steuereinrichtung 8 bekannt gemacht, vorzugsweise vom Wechselrichter übermittelt wird.

Der Leitungsstrang 2b umfasst die Teilnehmer 10d-f. Der Teilnehmer 10f ist beispielsweise ein Teilnehmer mit einer Photovoltaikanlage, bei dem z. B. ein Smart Meter 12d angeschlossen ist. Das Smart Meter 12d fungiert als Messeinrichtung. Dasselbe gilt für das Smart Meter 12c, welches an den Teilnehmer 10d angeordnet ist. Der Installationsprozess erfolgt entsprechend dem zuvor beschriebenen für Leitungsstrang 2a.

Schließlich ist in dem Leitungsstrang 2c beispielsweise an dem Teilnehmer 10g eine Photovoltaikanlage eingerichtet und an dem Teilnehmer 10i ebenfalls. Als Messeinrichtungen dienen beispielsweise der Wechselrichter 12e des Teilnehmers 10g und eine im Leitungsstrang 2c angeordnete Ladestation 12f. Auch hier erfolgt der Installationsprozess gemäß dem für 2a beschriebenen Verfahren.

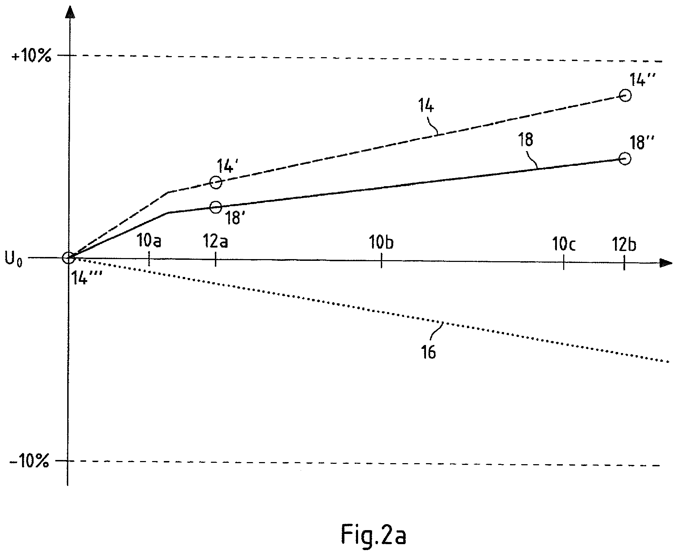

Zur Optimierung der Netzauslastung, insbesondere zur Optimierung des Wirkstroms, welcher über das Netz fließen kann, ohne dass ein zulässiges Spannungsband verlassen wird, wird beispielshaft am Spannungsprofil im Leitungsstrang 2a gemäß Figur 2a diskutiert.

In Figur 2a ist die Spannung U entlang des Leitungsstrangs 2a aufgetragen. Insbesondere ist das Spannungsprofil bzw. der Spannungsverlauf aufgetragen. Ferner sind die Positionen der Teilnehmer 10a -c als auch der Messeinrichtung 12a und 12b entlang des Leitungsstrangs 2a in der Figur 2a dargestellt. Die Abzisse soll beispielsweise die Nennspannung Uo darstellen, die in Deutschland beispielsweise 400 Volt in der Niederspannung beträgt.

Zunächst sei die Situation diskutiert, in dem an den Teilnehmern 10a und 10c Wirkleistung eingespeist wird und der Verbrauch des Teilnehmers 10b vernachlässigbar ist. Das Spannungsprofil entspricht dem der gestrichelten Linie 14. Mithilfe der Messeinrichtung 12a kann der Messwert 14' und mithilfe der Messeinrichtung 12b der Messwert 14" erfasst werden. Darüber hinaus kann an dem Transformator 4 der Messwert 14"' erfasst werden. Der Spannungsverlauf wird in der Steuereinrichtung 8 aus den Messwerten 14' - 14'''errechnet. Hierbei wird in der Steuereinrichtung 8 die Netztopologie, d. h. der Verlauf des Leitungsstrangs 2a berücksichtig, im vorliegenden Fall ist dies eine Leitung mit gleichbleibenden Querschnitt und somit gleichbleibenden Widerstand. Dadurch ist es möglich, die Messwerte 14' - 14"' in Bereichen mit gleicher Strombelastung linear zu interpolieren, so dass ein abschnittsweise linearer Spannungsverlauf 14 entlang des Leitungsstrangs 2a errechnet wird. Zu erkennen ist, dass die Spannung an dem Teilnehmer 10c durch zusätzliche dezentrale Erzeugung im Leitungsstrang 2a nur noch geringfügig steigen darf bevor die obere Spannungsbandgrenze erreicht wird.

Um dem entgegenzuwirken, ist es beispielsweise möglich, dass die Photovoltaikanlage des Teilnehmers 10c induktive Blindleistung dem Leitungsstrang 2 a entnimmt und somit als Verbraucher von Blindleistung gilt. Diese Blindleistungsentnahme führt zu einer Absenkung der Spannung entlang des Leitungsstrangs 2a. Die allein durch die Blindleistungsentnahme bewirkte theoretische Spannung auf dem Leitungsstrang 2a ist in der gepunkteten Linie 16 dargestellt. Durch die Überlagerung des Wirk- und des Blindstromflusses überlagern sich auch die Spannungsverläufe 14 und 16 zu dem nun auf dem Leitungsstrang auftretenden Spannungsverlauf 18.

Der Steuereinrichtung 8 ist bekannt, dass der Teilnehmer 10c Blindleistung bezieht und empfängt neue Messwerte 18', 18" und 18"'. In Kenntnis der Position sowohl des Teilnehmers 10c als auch der Messeinrichtung 12a und 12b wird in der Steuereinrichtung 8 der tatsächliche Spannungsverlauf 18 entlang des Leitungsstrangs 2a errechnet. Zu erkennen ist, dass an dem Teilnehmer 10c die Spannung U nun einen größeren Abstand zur oberen Grenze des Spannungsbandes aufweist und bei einer weiteren Zunahme der dezentralen Erzeugung zunächst innerhalb des zulässigen Bereiches liegen wird. In Kenntnis des Leitungsverlaufs als auch der Position der Messeinrichtung 12a, 12b sowie der Teilnehmer 10a und 10c kann die Steuereinrichtung 8 zudem eine Einspeisung der Blindleistung an dem Teilnehmer 10a derart gestalten, dass die von dem Teilnehmer 10c bezogene Blindleistung direkt im Leitungsstrang 2a eingespeist und damit kompensiert wird. Ein Bezug dieser Blindleistung aus anderen Leitungssträngen 2b und 2c oder aus dem vorgelagerten Netz ist somit nicht notwendig.

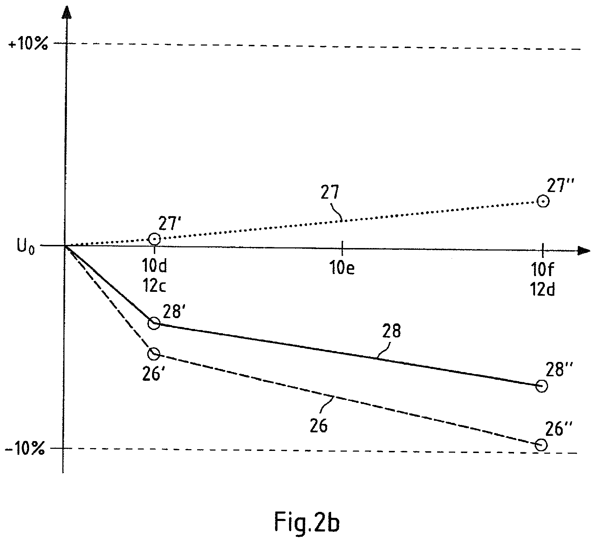

Eine weitere beispielhafte Konfiguration ergibt sich auf dem Leitungsstrang 2b. Hier können beispielsweise die Teilnehmer 10a-c eine Last darstellen, welche dem Leitungsstrang 2b Wirkleistung entnehmen. An dem Teilnehmer 10f befindet sich zwar eine Erzeugungsanlage, diese speist z. B. aufgrund der Wetterlage derzeit aber keinen Wirkstrom ein. Der hieraus resultierende Spannungsverlauf ist in der gestrichelten Linie 26 der Figur 2b dargestellt. Dieser ergibt sich aufgrund der Messungen mit den Messeinrichtungen 12c und 12d welche die Messwerte 26' und 26" an die Steuereinrichtung 8 übermitteln.

In der Steuereinrichtung 8 wird aus den übermittelten Messwerten 26', 26" das Spannungsprofil 26 errechnet. Hierbei ist entscheidend, dass in der Steuereinrichtung 8 die relative Position der Messeinrichtungen 12c und 12d im Verlaufe des Leitungsstrangs 2b bekannt sind. Ferner ist die relative Position des Teilnehmers 10f in der Steuereinrichtung 8 bekannt. Anhand dieser Informationen als auch einer Information über die Netztopologie, insbesondere den Verlauf des Leitungsstrangs 2b ist es möglich, gegebenenfalls durch Interpolation, das Spannungsprofil 26 zu errechnen. Im gezeigten Beispiel führt der Bezug der Wirkleistung durch die Teilnehmer 10d-f zunächst zu einer Spannung führt, die für den Teilnehmer 10f bereits am unteren Rand des Spannungsbandes liegt. Ein Bezug von weiterer Wirkleistung würde dazu führen, dass die Spannung am Teilnehmer 10f das Spannungsband verlässt.

Um jedoch zu ermöglichen, dass die Wirkleistung, welche der Teilnehmer 10f beziehen darf, größer ist, wird vorgeschlagen, dass die Steuereinrichtung 8 anhand des ermittelten Spannungsprofils 26 feststellt, dass der Teilnehmer 10f zusätzlich Blindleistung einspeist. Ein entsprechender Steuerbefehl wird an den Teilnehmer 10f übermittelt.

In Summe führt dies dazu, dass sich das tatsächliche Spannungsprofil 28 einstellt. Hierbei werden an den Messpunkten 12c und 12f die Messwerten 28' oder 28' erfasst'. Diese Messwerte 28' und 28"werden an die Steuereinrichtung 8 übermittelt und zusammen mit dem Messwert 28" kann der Spannungsverlauf 28 berechnet werden. Es kann mit dem Spannungsverlauf 28 festgestellt werden, dass keine Verletzung des zulässigen Spannungsbandes vorliegt.

Zu einer anderen Tageszeit oder einem andern Tag kann die Wetterlage sich verbessert haben und gleichzeitig der Bezug von Wirkleistung an den Teilnehmern 10d-f geringer sein, so dass der Laststrom der Teilnehmer 10d-f vollständig von der Erzeugungsanlage des Teilnehmers 10f übernommen werden kann. Daraus ergibt sich der Spannungsverlauf 27 bei dem zur Minimierung der Stromverluste im Leitungsstrang 2b keine Blindleistungseinspeisung erforderlich ist.

Mithilfe der gesteuerten Blindleistungsentnahme ist es möglich, die Kapazitätsgrenzen des Netzes zu erhöhen. Hierbei ist sowohl die Position als auch die Topologie des Leitungsstrangs 2b in der Steuereinrichtung 8 zentral bekannt.

Schließlich wird für den Leitungsstrang 2c eine weitere Situation erläutert, bei der nur am Teilnehmer 10g eine Erzeugungsanlage verfügbar ist, beispielsweise eine Photovoltaikanlage. Darüber hinaus sind die Messeinrichtungen 12e und 12f samt deren Position bekannt. Diese beiden Messeinrichtungen 12e, 12f übermitteln ihre Messwerte insbesondere über die gemessene Spannung an die Steuereinrichtung 8. Abhängig von den gemessenen und übermittelten Werten wird in der Steuereinrichtung 8 der Verlauf des Spannungsprofils unter Berücksichtigung der Position der Messeinrichtung 12e, 12f errechnet.

Unter Berücksichtigung der Vorgabe des zulässigen Spannungsbandes werden dem Teilnehmer 10g Informationen übermittelt, ob Blindleistung bezogen oder eingespeist werden muss. Da insbesondere mit einer nahe der Ortsnetzstation im Leitungsstrang 2b befindlichen Blindleistungseinspeisung nicht der gesamte Leitungsstrang mit einem Blindleistungsfluss beeinflusst wird, eignet sich diese Erzeugungsanlage besonders zur Kompensation von Blindleistungsflüssen aus anderen Leitungssträngen oder zur Bereitstellung von Blindleistung für das vorgelagerte Mittelspannungsnetz 6.

Mit Hilfe des gegenständlichen Verfahrens und der gegenständlichen Steuereinrichtung ist es möglich, unter Berücksichtigung der Position der Messeinrichtung als auch der Teilnehmer ein Spannungsprofil über einen Leitungsstrang zu errechnen und abhängig von der Position des Teilnehmers und des Spannungsprofils dem Teilnehmer Informationen zu induktiven und kapazitiven Blindleistungsflüssen mitzuteilen, so dass die Netzauslastung optimiert ist.

Durch das zur Verfügung stellen von Blindleistung insbesondere am Anfang eines Leitungsstrangs, wie für die Teilnehmer 10a und 10g dargestellt, ist es möglich, eine Blindleistungskompensation innerhalb des Ortsnetztransformators durch Bereitstellung von Blindleistung durch die Mittelspannungsebene 6 zu verkleinern. Hierdurch kann der Transformator 4 bzw. dessen Wicklungen für die Übertragung von mehr Wirkleistung genutzt werden, da keine Blindleistung oder nur weniger Blindleistung für eine Blindleistungskompensation über den Transformator 4 in die Leitungsstränge 2a - c übertragen werden muss.

## Patentansprüche

1. Verfahren zur Steuerung eines Blindleistungsflusses in einem elektrischen Niederspannungsnetz durch eine Steuereinrichtung (8) bei dem,
- von der Steuereinrichtung (8) zumindest zwei lokal gemessene elektrische Größen, insbesondere lokal gemessene Netzspannungen und/oder lokal gemessene Wirk- und/oder Blindleistungen von jeweils an einem Leitungsstrang des Verteilnetzes angeschlossenen Messeinrichtungen (12a-f) empfangen wird,
- von der Steuereinrichtung (8) die lokal ermittelten elektrischen Größen einer Position der lokalen Messeinrichtungen (12a-f) zugeordnet werden,
- von der Steuereinrichtung (8) ein Spannungsprofil (26) entlang des Leitungsstrangs abhängig von den lokal gemessenen elektrischen Größen und den relativen Positionen der Messeinrichtungen (12a-f) erstellt wird,
- von der Steuereinrichtung (8) ein Blindleistungswert für zumindest einen Teilnehmer an dem Leitungsstrang abhängig von dem Spannungsprofil (26) bestimmt wird, **dadurch gekennzeichnet,**
- **dass** zwei Blindleistungswerte durch die Steuereinrichtung (8) derart bestimmt werden, dass entfernt von einem Netzverknüpfungspunkt bezogene Blindleistung durch im Bereich an einem Netzverknüpfungspunkt eingespeiste Blindleistung überlagert wird, derart,- dass eine Blindleistungsübertragung über einen Transformator zwischen dem Niederspannungsnetz und einem Mittelspannungsnetz (6) auf einen der Steuereinrichtung (8) extern vorgebbaren Wert optimiert wird.

2. Verfahren nach Anspruch 1, **dadurch gekennzeichnet, dass** durch die Steuereinrichtung die lokal gemessenen elektrischen Größen über den Verlauf des Leitungsstrangs interpoliert werden.

3. Verfahren nach Anspruch 1 oder 2, **dadurch gekennzeichnet, dass** durch die Steuereinrichtung der Blindleistungswert des Teilnehmers zusätzlich abhängig von der Position des Teilnehmers bestimmt wird und/oder der Blindleistungswert des Teilnehmers zusätzlich abhängig von dem ermittelten Spannungsprofil (26) bestimmt wird.

4. Verfahren nach einem der vorangehenden Ansprüche, **dadurch gekennzeichnet, dass** durch die Steuereinrichtung der Blindleistungswert als Verschiebungsfaktor cos ϕ, insbesondere ein Quotient aus Wirkleistung und Scheinleistung an dem jeweiligen Teilnehmer berechnet wird, wobei induktive oder kapazitive Blindleistung bezogen oder gespeist werden kann.

5. Verfahren nach einem der vorangehenden Ansprüche, **dadurch gekennzeichnet, dass** zwei Blindleistungswerte durch die Steuereinrichtung zusätzlich abhängig von einer am Netzübergabepunkt einzustellenden Blindleistung eingestellt werden.

6. Verfahren nach einem der vorangehenden Ansprüche, **dadurch gekennzeichnet, dass** von einer Messeinrichtung (12a-f) eine Information zu einer relativen und/oder absoluten Position der Messeinrichtung (12a-f) in dem Leitungsstrang durch die Steuereinrichtung empfangen wird und/oder dass von einer Messeinrichtung (12a-f) eine eindeutige Kennung durch die Steuereinrichtung empfangen wird, insbesondere dass bei einer Erstinstallation der Messeinrichtung (12a-f) die Position und/oder Kennung durch die Steuereinrichtung empfangen werden.

7. Verfahren nach einem der vorangehenden Ansprüche, **dadurch gekennzeichnet, dass** von einem Teilnehmer eine Information zu einer relativen und/oder absoluten Position des Teilnehmers in dem Leitungsstrang durch die Steuereinrichtung empfangen wird und/oder dass von einem Teilnehmer eine eindeutige Kennung durch die Steuereinrichtung empfangen wird und/oder Informationen zu einer maximalen Wirkleistung und/oder einer maximalen induktiven und/oder kapazitiven Blindleistung durch die Steuereinrichtung empfangen werden, insbesondere dass bei einer Erstinstallation des Teilnehmers die Position und/oder die Kennung und/oder die Wirk-/Blindleistungsinformationen durch die Steuereinrichtung empfangen werden.

8. Verfahren nach einem der vorangehenden Ansprüche, **dadurch gekennzeichnet, dass** von einem Teilnehmer Informationen über eine Abhängigkeit von Wirkleistungsaufnahme / -abgabe zu kapazitiver oder induktiver Blindleistung durch die Steuereinrichtung empfangen wird.

9. Steuereinrichtung eingerichtet zur Steuerung eines Blindleistungsflusses in einem elektrischen Niederspannungsnetz, umfassend,
- Empfangsmittel eingerichtet zum Empfangen zumindest zweier lokal gemessenen elektrischen Größen, insbesondere lokal gemessene Netzspannungen und/oder lokal gemessene Wirk- und/oder Blindleistungen von jeweils an einem Leitungsstrang des Verteilnetzes angeschlossenen Messeinrichtungen (12a-f),
- Rechenmittel eingerichtet zum Zuordnen der lokal ermittelten elektrischen Größen zu einer Position der lokalen Messeinrichtungen (12a-f), zum Erstellen eines Spannungsprofils (26) entlang des Leitungsstrangs abhängig von der lokal gemessenen elektrischen Größen und den relativen Positionen der Messeinrichtungen (12a-f), und zum Bestimmen eines Blindleistungswertes für einen Teilnehmer (10a-i) an dem Leitungsstrang abhängig von dem Spannungsprofil (26), **dadurch gekennzeichnet,**
- **dass** zwei Blindleistungswerte durch die Steuereinrichtung (8) derart bestimmt werden, dass entfernt von einem Netzverknüpfungspunkt bezogene Blindleistung durch im Bereich an einem Netzverknüpfungspunkt eingespeiste Blindleistung überlagert wird, derart,
- **dass** eine Blindleistungsübertragung über einen Transformator zwischen dem Niederspannungsnetz und einem Mittelspannungsnetz (6) auf einen der Steuereinrichtung (8) extern vorgebbaren Wert optimiert wird.

10. System zur Steuerung eines Blindleistungsflusses in einem elektrischen Verteilnetz mit zumindest einer Steuereinrichtung (8) nach Anspruch 9, zumindest ein Teilnehmer (10a-i) eingerichtet zum Empfangen von Blindleistungswerten von der Steuereinrichtung (8) und zum Regeln eines Blindleistungsflusses sowie mit zumindest einer Messeinrichtung (12a-f) eingerichtet zum Messen einer elektrischen Größe und zum Übermitteln der gemessenen elektrischen Größe an die Steuereinrichtung (8).

11. System nach Anspruch 10, **dadurch gekennzeichnet, dass** die Messeinrichtung (12a-f) ein Smart Meter, ein Wechselrichter eines Teilnehmers (10a-i) oder eine Ladestation für Elektrofahrzeuge ist.

## Claims

1. Method for controlling a reactive power flow in a low-voltage electrical network by a control device (8) in which,
- the control device (8) receives at least two locally measured electrical quantities, in particular locally measured network voltages and/or locally measured active and/or reactive powers from measuring devices (12a-f) respectively connected to a line section of the distribution network,
- the control device (8) assigns the locally determined electrical quantities to a position of the local measuring devices (12a-f),
- a voltage profile (26) along the line section is created by the control device (8) as a function of the locally measured electrical quantities and the relative positions of the measuring devices (12a-f),
- the control device (8) determines a reactive power value for at least one subscriber on the line section as a function of the voltage profile (26), **characterized in that**
- two reactive power values are determined by the control device (8) in such a way that reactive power drawn remotely from a network connection point is superimposed by reactive power fed into the region at a network connection point, in such a way that
- reactive power transmission via a transformer between the low-voltage network and a medium-voltage network (6) is optimized to a value which can be predetermined externally for the control device (8).

2. Method according to claim 1, **characterized in that** the locally measured electrical quantities are interpolated by the control device over the course of the line section.

3. Method according to claim 1 or 2, **characterized in that** the reactive power value of the subscriber is additionally determined by the control device as a function of the position of the subscriber and/or the reactive power value of the subscriber is additionally determined as a function of the determined voltage profile (26).

4. Method according to one of the preceding claims, **characterized in that** the control device calculates the reactive power value as displacement factor cos ϕ, in particular a quotient of active power and apparent power at the respective subscriber, inductive or capacitive reactive power being either obtained or fed.

5. Method according to one of the preceding claims, **characterized in that** two reactive power values are additionally set by the control device depending on a reactive power to be set at the network transfer point.

6. Method according to one of the preceding claims, **characterized in that** information about a relative and/or absolute position of the measuring device (12a-f) in the line section is received by the control device from a measuring device (12a-f) and/or **in that** an unambiguous identification is received by the control device from a measuring device (12a-f), in particular **in that** the position and/or identification is received by the control device when the measuring device (12a-f) is installed for the first time.

7. Method according to one of the preceding claims, **characterized in that** information about a relative and/or absolute position of the subscriber in the line section is received by the control device from a subscriber, and/or **in that** an unambiguous identification is received by the control device from a subscriber, and/or information about a maximum active power and/or a maximum inductive and/or capacitive reactive power is received by the control device, in particular in that the position and/or the identification and/or the active/reactive power information is/are received by the control device when the subscriber is installed for the first time.

8. Method according to one of the preceding claims, **characterized in that** information about a dependence of active power consumption/output on capacitive or inductive reactive power is received by the control device from a subscriber.

9. Control device arranged for controlling a reactive power flow in a low-voltage electrical network, comprising,
- receiving means arranged for receiving at least two locally measured electrical quantities, in particular locally measured network voltages and/or locally measured active and/or reactive powers from measuring devices (12a-f) respectively connected to a line section of the distribution network,
- computing means arranged for assigning the locally determined electrical quantities to a position of the local measuring devices (12a-f), for establishing a voltage profile (26) along the line section depending on the locally measured electrical quantities and the relative positions of the measuring devices (12a-f), and for determining a reactive power value for a subscriber (10a-i) on the line section depending on the voltage profile (26), **characterized in that** the reactive power value is determined by the voltage profile (26), **characterized in that**
- two reactive power values are determined by the control device (8) in such a way that reactive power drawn remotely from a network connection point is superimposed by reactive power fed into the region at a network connection point, in such a way,
- that a reactive power transmission via a transformer between the low-voltage network and a medium-voltage network (6) is optimized to a value which can be predetermined externally for the control device (8).

10. System for controlling a reactive power flow in an electrical distribution network with at least one control device (8) according to claim 9, at least one subscriber (10a-i) arranged for receiving reactive power values from the control device (8) and for regulating a reactive power flow, and with at least one measuring device (12a-f) arranged for measuring an electrical quantity and for transmitting the measured electrical quantity to the control device (8).

11. System according to claim 10, **characterized in that** the measuring device (12a-f) is a smart meter, an inverter of a subscriber (10a-i) or a charging station for electric vehicles.

## Revendications

1. Procédé de contrôle d'un flux de puissance réactive dans un réseau électrique basse tension par un dispositif de contrôle (8), dans lequel
- au moins deux grandeurs électriques mesurées localement, en particulier des tensions de réseau mesurées localement et/ou des puissances actives et/ou réactives mesurées localement de dispositifs de mesure (12a-f) raccordés respectivement sur un conducteur du réseau de distribution sont réceptionnées par le dispositif de contrôle (8),
- les grandeurs électriques déterminées localement sont associées par le dispositif de contrôle (8) à une position des dispositifs de mesure locaux (12a-f),
- le dispositif de contrôle (8) établit un profil de tension (26) le long du conducteur en fonction des grandeurs électriques mesurées localement et des positions relatives des dispositifs de mesure (12a-f),
- le dispositif de contrôle (8) détermine une valeur de puissance réactive pour au moins un abonné sur le conducteur en fonction du profil de tension (26), **caractérisé en ce que**
- deux valeurs de puissance réactive sont déterminées par le dispositif de contrôle (8), de sorte que la puissance réactive distante d'un point de connexion au réseau est superposée à la puissance réactive injectée en un point de connexion au réseau de sorte qu'un transfert de puissance réactive est optimisé par un transformateur entre le réseau basse tension et un réseau moyenne tension (6), à une valeur externe au dispositif de contrôle (8).

2. Procédé selon la revendication 1, **caractérisé en ce que** les grandeurs électriques mesurées localement sont interpolées par le dispositif de contrôle le long du conducteur.

3. Procédé selon la revendication 1 ou 2, **caractérisé en ce que** la valeur de puissance réactive de l'abonné est en outre déterminée par le dispositif de contrôle en fonction de la position de l'abonné et/ou la valeur de puissance réactive de l'abonné est en outre déterminée en fonction du profil de tension (26) déterminé.

4. Procédé selon l'une des revendications précédentes, **caractérisé en ce que** la valeur de puissance réactive est calculée par le dispositif de contrôle en tant que facteur de décalage cos ϕ, en particulier un quotient de la puissance active et la puissance apparente pour l'abonné respectif, où la puissance réactive inductive ou capacitive peut être donnée ou enregistrée.

5. Procédé selon l'une des revendications précédentes, **caractérisé en ce que** deux valeurs de puissance réactive sont en outre réglées par le dispositif de contrôle en fonction d'une puissance réactive à ajuster en un point de transmission de réseau.

6. Procédé selon l'une des revendications précédentes, **caractérisé en ce qu'**une information concernant une position relative et/ou absolue du dispositif de mesure (a-f) sur le conducteur est réceptionnée par le dispositif de contrôle depuis un dispositif de mesure (a-f) et/ou **en ce qu'**un paramètre indéniable est réceptionné par le dispositif de contrôle depuis un dispositif de mesure (a-f), en particulier **en ce que** lors d'une première installation du dispositif de mesure (a-f), la position et/ou le paramètre est réceptionné par le dispositif de contrôle.

7. Procédé selon l'une des revendications précédentes, **caractérisé en ce qu'**une information concernant une position relative et/ou absolue d'un abonné dans le conducteur est réceptionnée par le dispositif de contrôle depuis l'abonné et/ou **en ce qu'**un paramètre indéniable est réceptionné par le dispositif de contrôle depuis l'abonné et/ou des informations concernant une puissance active maximale et/ou une puissance réactive inductive et/ou capacitive maximale sont réceptionnées par le dispositif de contrôle depuis un abonné, en particulier **en ce que** lors d'une première installation de l'abonné, la position et/ou le paramètre et/ou les informations de puissance active-réactive soient réceptionnées par le dispositif de contrôle.

8. Procédé selon l'une des revendications précédentes, **caractérisé en ce que** des informations concernant une dépendance de la réception/transmission de puissance active à la puissance réactive capacitive ou inductive sont réceptionnées par le dispositif de contrôle depuis un abonné.

9. Dispositif de contrôle destiné au contrôle d'un flux de puissance réactive dans un réseau électrique basse tension, comprenant
- un moyen de réception destiné à recevoir au moins deux grandeurs électriques mesurées localement, en particulier des tensions de réseau mesurées localement et/ou des puissances actives et/ou réactives mesurées localement de dispositifs de mesure (12a-f) raccordés respectivement sur un conducteur du réseau de,
- un moyen de calcul destiné à associer les grandeurs électriques mesurées localement à une position des dispositifs de mesure locaux (12a-f), l'établissement d'un profil de tension (26) le long du conducteur en fonction des grandeurs électriques mesurées localement et des positions relatives des dispositifs de mesure (12a-f), et de détermination d'une puissance réactive pour un abonné (10a-i) sur le conducteur en fonction du profil de tension (26), **caractérisé en ce que**
- deux valeurs de puissance réactive sont déterminées par le dispositif de contrôle (8), de sorte que la puissance réactive distante d'un point de connexion au réseau est superposée à la puissance réactive injectée en un point de connexion au réseau de sorte que
- un transfert de puissance réactive est optimisé par un transformateur entre le réseau basse tension et un réseau moyenne tension (6), à une valeur externe au dispositif de contrôle (8).

10. Système pour le contrôle du flux de puissance réactive dans un réseau électrique de distribution avec au moins un dispositif de contrôle (8) selon la revendication 9, au moins un abonné (10a-i) pouvant recevoir des valeurs de puissance réactive du dispositif de contrôle (8), pour le réglage d'un flux de puissance réactive ainsi qu'avec au moins un dispositif de mesure (12a-f) destiné à mesurer une grandeurs électriques, et pour la transmission de la grandeur électrique mesurée au dispositif de contrôle (8) .

11. Système selon la revendication 10, **caractérisé en ce que** le dispositif de mesure (12a-f) est un compteur intelligent, un onduleur d'un abonné (10a-i) ou un poste de charge pour véhicule électrique.
